# EUROPEAN PATENT APPLICATION

(11) **EP 2 759 737 A1**
(43) Date of publication of application: **30.07.2014**
(21) Application number: 14150787.1
(22) Date of filing: 10.01.2014
(51) Int. Cl.: F16F 15/08

(54) **Device for absorbing the vibrations originating from a pump or a pumping device**

(30) Priority: 23.01.2013 IT PD20130011
(71) Applicant: Dab Pumps S.p.A., 35035 Mestrino (Padova) (IT)
(72) Inventor: Sinico, Francesco, 36075 MONTECCHIO MAGGIORE VI (IT); Iacoponi, Alessandro, 56021 CASCINA, Fraz. S. Lorenzo a Pagnatico PI (IT)
(74) Representative: Modiano, Micaela Nadia

(57) **Abstract**

A device (10) for absorbing the vibrations originating from a pump or a pumping device, which comprises a first element (11) and a second element (15) that is associated coaxially with the first element with the interposition of at least one elastic element with axial deformation (16) and of at least one elastic element with radial deformation (17).

## Description

The present invention relates to a device for absorbing the vibrations originating from a pump or a pumping device.

As is known, pumps often cause vibrations, therefore also noise, caused for example by the rotation of the impellers, by the flowing of the liquid, by any cavitation phenomena or by any priming.

These vibrations are transmitted to the external elements with which the pump, or the pumping device that contains it, is in contact.

So far, this problem has been solved only partially by applying to the pump or to the device resting elements (for resting on a surface, on the floor or against a wall) made of a material capable of absorbing vibrations, such as for example an elastomeric material.

This solution is unable to reduce effectively the transmission of vibrations originating from the pump.

The aim of the present invention is to provide a device capable of absorbing effectively the vibrations that would otherwise be transferred from the pump or pumping device to the external elements that are in contact with it.

Within this aim, an object of the invention is to reduce the noise of the pump or of the pumping device due to the transmission of vibrations.

This aim, as well as these and other objects that will become more apparent hereinafter, are achieved by a device for absorbing the vibrations originating from a pump or a pumping device, characterized in that it comprises a first element and a second element that is associated coaxially with the first element with the interposition of at least one elastic element with axial deformation and of at least one elastic element with radial deformation.

Further characteristics and advantages of the invention will become more apparent from the description of a preferred but not exclusive embodiment of the device according to the invention, illustrated by way of non-limiting example in the accompanying drawings, wherein:
Figure 1 is an exploded perspective view of the device according to the invention;
Figure 2 is a sectional view of the device according to the invention;
Figure 3 is a view of a possible application of the device according to the invention.

With reference to the cited figures, the device according to the invention, generally designated by the reference numeral 10, comprises a first element 11 made of plastic material, by means of which it is associated directly with a pump 12, and in the particular case shown with a resting foot 13 of the pump 12 for resting against a resting surface 14, and a second element 15, also made of plastic material, that is associated coaxially with the first one with the interposition of an elastic element with axial deformation 16 and of at least one elastic element with radial deformation 17.

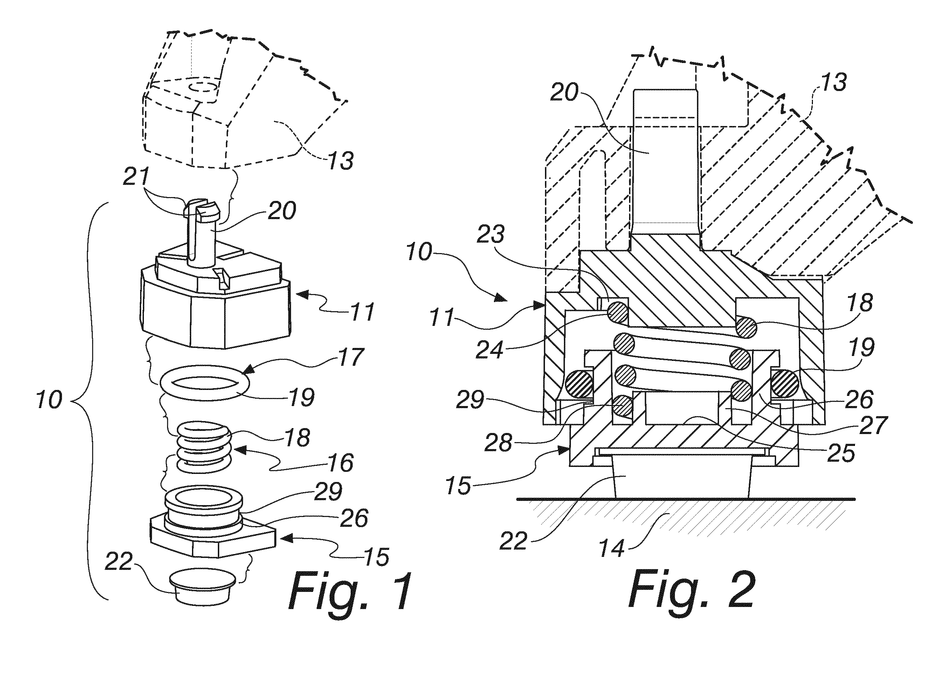

In particular, as is clearly visible in the sectional view of Figure 2, said elastic element with axial deformation 16 consists of a helical spring 18 made of metallic material and the elastic element with radial deformation 17 consists of a ring 19 made of elastomer.

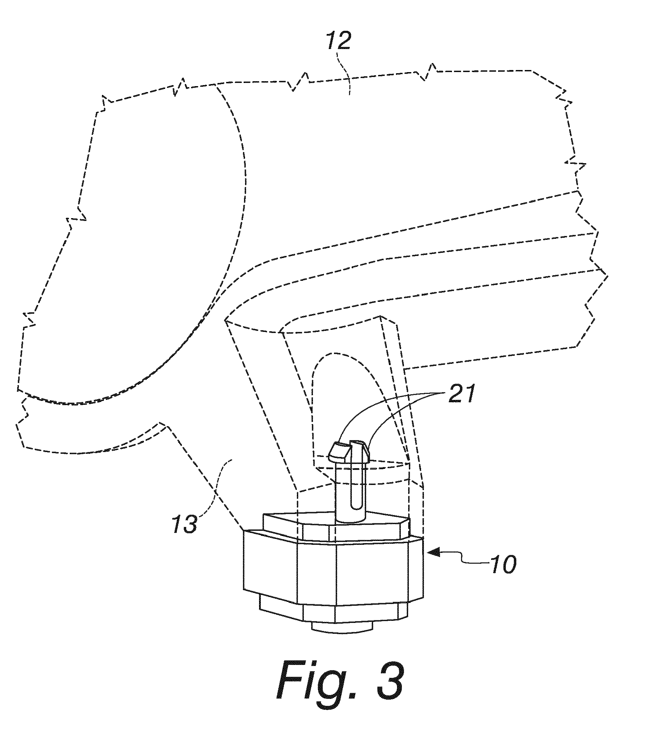

As shown in Figure 3, the device 10 is shown in its application to the containment body of a pump 12, but can also be applied to a pumping device or in general to devices that produce vibrations during operation.

As is clearly visible, again according to this example, the first element 11 engages the resting foot 13 by means of a pin 20 that passes through an adapted hole thereof. The pin 20 is provided, at the free end, with protrusions 21 for gripping the rim of the hole and has a split thanks to which, by means of the grip protrusions 21, it passes by elastic deformation through and past the hole and then engages with a snap action the resting foot 13.

Moreover, the device 10 also comprises a third element 22 made of elastomeric material, which is made integral with the second element 15, preferably by adhesive bonding, and consists substantially of a disk that is interposed between said second element and the resting surface 14.

As shown in the sectional view of Figure 2, the first element 11 is substantially bell-shaped and the second element 15 is inserted therein with play.

More particularly, the first element 11 has a recess 23 in which a first end 24 of the helical spring 18, arranged coaxially with the first element 11 and with the second element 15, engages.

The second element 15 has a base 25 from which protrude a first circular raised portion 26 and a second circular raised portion 27 which has a smaller radius and is concentric with the first one: the helical spring 18 engages with a second end 28 between the first circular raised portion 26 and the second circular raised portion 27.

As mentioned above, the elastic element with radial deformation 17 consists of a ring 19 made of elastomer. Such ring is coaxial with the first element 11 and with the second element 15 and is interposed between the first circular raised portion 26, in particular in a circular slot 29 thereof that surrounds it, and the internal wall of the first element 11, which as mentioned above is substantially bell-shaped.

Operation of the device according to the invention is evident from what has been described and illustrated and in particular it is evident that during the operation of the pump 12 the first element 11 moves integrally with the second element 15 and with the third element 22, which remain instead substantially motionless and in contact with the resting surface 14.

In particular, the helical spring 18 is capable of damping the axial vibrations (using its longitudinal axis as reference) and the ring 19 is capable of damping radial vibrations.

The residual vibrations transmitted toward the resting surface 14 are damped by the third element 22.

It should be noted that the device, which is capable of absorbing vibrations more than the simple resting elements known so far, allows a considerable reduction also of the noise that these vibrations would otherwise produce.

It should also be noted that the helical spring 18 also makes it possible to compensate for any differences in level of the pump 12 or of the pumping device with respect to the floor, further helping to reduce the noise that in this case would be caused by the continuous beating of the resting foot 13 on the resting surface 14 due to vibrations.

In practice it has been found that the invention achieves the intended aim and object, providing a device that is capable of absorbing effectively the vibrations that otherwise would be transferred from the pump, or from a pumping device, to the resting surface.

The invention thus conceived is susceptible of numerous modifications and variations, all of which are within the scope of the appended claims; all the details may furthermore be replaced with other technically equivalent elements.

In practice, the materials used, so long as they are compatible with the specific use, as well as the contingent shapes and dimensions, may be any according to the requirements and the state of the art.

The disclosures in Italian Patent Application No. PD2013A000011 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device (10) for absorbing the vibrations originating from a pump or a pumping device, **characterized in that** it comprises a first element (11) and a second element (15) that is associated coaxially with the first element with the interposition of at least one elastic element with axial deformation (16) and of at least one elastic element with radial deformation (17).

2. The device according to claim 1, **characterized in that** it comprises a third element (22) made of elastomeric material, which is integral with said second element (15) and is interposed between it and a resting surface (14).

3. The device according to claim 1, **characterized in that** said elastic element with axial deformation (16) consists substantially of a helical spring (18) that is arranged coaxially with said first element (11) and with said second element (15).

4. The device according to claim 1, **characterized in that** said first element (11) is substantially bell-shaped and said second element (15) is inserted coaxially therein with play.

5. The device according to claims 3 and 4, **characterized in that** said first element (11) has a recess (23) in which a first end (24) of said helical spring (18) engages and said second element (15) has a base (25) from which protrude a first circular raised portion (26) and a second circular raised portion (27) that has a smaller radius and is concentric with the first one, said helical spring (18) engaging with a second end (28) between said first circular raised portion (26) and said second circular raised portion (27).

6. The device according to claim 5, **characterized in that** said elastic element with radial deformation (17) consists of an elastomer ring (19), which is coaxial with said first element (11) and with said second element (15) and is interposed between said first circular raised portion (26) and the internal wall of said first element (11).
